# EUROPÄISCHE PATENTSCHRIFT

(11) **EP 2 107 767 B1**
(45) Veröffentlichungstag und Bekanntmachung des Hinweises auf die Patenterteilung: **20.06.2012**
(21) Anmeldenummer: 08153897.7
(22) Anmeldetag: 01.04.2008
(51) Int. Cl.: H04N 7/18, H04M 1/02

(54) **Stationsgerät für eine Hauskommunikationsanlage**
Stationary device for a house intercom system
Appareil de station pour une installation de communication domestique

(43) Veröffentlichungstag der Anmeldung: 07.10.2009
(73) Patentinhaber: GIRA Giersiepen GmbH & Co. KG, 42477 Radevormwald (DE)
(72) Erfinder: Mähringer, Claus, 45549 Sprockhövel (DE); Dornseiff, Andre, 51688 Wipperfürth (DE)
(74) Vertreter: Patentanwälte Dr. Solf & Zapf

(56) Entgegenhaltungen:
- EP-A- 1 381 204
- WO-A-01/06598
- WO-A-2005/088944
- DE-A1-102004 016 539
- JP-A- 2001 102 116
- US-A1- 2003 086 562
- US-A1- 2006 113 143

## Beschreibung

Die vorliegende Erfindung betrifft ein Stationsgerät, und zwar insbesondere eine Wohnungsstation, für eine Hauskommunikstionsanlage, mit einem Gerätegehäuse, mit Audio-Komponenten mit einem Mikrofon und einem Lautsprecher für eine Audio-Kommunikation nach einem Aufbau einer Kommunikationsverbindung mit einem anderen Stationsgerät der Hauskommunikationsanlage sowie mit Video-Komponenten mit einem Display zur Darstellung eines Videobildes.

Die EP 1 843 590 A1 beschreibt eine Hauskommunikationsanlage mit mindestens einem Stationsgerät der beschriebenen Art. Konkret handelt es sich um eine Video-Wohnungsstation. Eine mit der Wohnungsstation über einen Zweidraht-Bus verbundene oder nach einem Rufsignal verbindbare, im Außenbereich einer Haus-Eingangstür angeordnete Türstation weist eine Videokamera auf, wobei das Display der Wohnungsstation zur Darstellung eines Videobildes der Videokamera der Türstation anhand eines über den Bus zu übertragenden Videosignals vorgesehen ist. Das bekannte Video-Stationsgerät ist im Vergleich zu einer reinen Audio-Station, die kein Video-Display, sondern nur Audio-Komponenten (insbesondere für eine Freisprechfunktion Mikrofon und Lautsprecher) aufweist, sehr groß ausgebildet, weil eine Gehäuse-Frontplatte einen ersten Flächenbereich für den Lautsprecher und zugehörige Schallöffnungen und dazu versetzt einen zweiten Flächenbereich mit dem Video-Display aufweist.

Das Dokument US 2003/0086562 A1 beschreibt ein Freisprech-Telefon, bei dem innerhalb eines Gehäuses ein Lautsprecher in einer Aufnahme gehalten ist. Der Lautsprecher ist in einem von einem Display (LCD) überdeckten Bereich angeordnet. Der Lautsprecher strahlt Schall unmittelbar in das Innere des Gehäuses, wobei der Schall über einfache Gehäuseöffnungen nach außen gelangt. Über die Anordnung eines Mikrofons ist in diesem Dokument nichts beschrieben.

Die Veröffentlichung WO 2005/088944 A1 beschreibt ein Mobiltelefon mit zwei Lautsprechern zur Stereo-Übertragung. Jedem Lautsprecher ist innerhalb des Gehäuses ein Akustikraum vorgeordnet, in dem auch ein Leuchtelement untergebracht ist. Über jeweils eine spezielle Gehäuseöffnung kann sowohl Schall, als auch Licht nach außen gelangen. Auch in diesem Dokument ist über eine Mikrofon-Unterbringung nichts Genaues offenbart.

Ähnliches gilt auch für das Dokument US 2006/0113143 A1. Auch bei dem darin beschriebenen Mobiltelefon sind zwei Lautsprecher zur Stereo-Übertragung vorgesehen, und jedem Lautsprecher ist ein Schallführungsraum vorgeordnet, aus dem der Schall über Gehäuseöffnungen nach außen gelangt.

Das Dokument DE 10 2004 016 539 A1 beschreibt allgemein ein Elektro-Installationsgerät zur Wandmontage und speziell eine Audio-Wohnungsstation einer Hauskammunikationsanlage.

Die weiteren Dokumente JP 2001-102116 A und WO 01/06598 A1 beschreiben jeweils eine besondere Mikrofon-Anordnung, wobei ein kleines, kapselartiges Mikrofon in einer Aufnahme untergebracht ist. Zur Anschlusskontaktierung sind zusätzliche Federkontakte vorgesehen, über die das Mikrofon mit zueinander konzentrischen Kontaktflächen einer Leiterplatte verbindbar ist.

Die EP 1 381 204 A2 beschreibt lediglich eine Verbindungsanordnung für ein Kommunikationsgerät.

Der vorliegenden Erfindung liegt die Aufgabe zu Grunde, ein Stationsgerät der eingangs beschriebenen Art mit einer besonders kompakten Bauform und mit dennoch guten akustischen Eigenshaften zu schaffen.

Erfindungsgemäß wird dies durch die Merkmale des unabhängigen Anspruchs 1 erreicht. Vorteilhafte Ausgestaltungsmerkmale der Erfindung sind Gegenstand der weiteren Ansprüche.

Demnach ist erfindungsgemäß der Lautsprecher der Audio-Komponenten innerhalb des Gehäuses in einem zu einer vorderen Geräte-Sichtseite hin von dem Display überdeckten Bereich angeordnet, wobei dem Lautsprecher eine Schallkammer mit mindestens einer seitlichen Gehäuse-Schallöffnung zugeordnet ist. Dies bedeutet, dass der Lautsprecher praktisch hinter dem Video-Display untergebracht ist, so dass im Flächenbereich einer Gehäusefront auch ein Bereich mit Schallöffnungen entfällt. Dadurch wird eine deutliche Reduzierung der Baugröße hinsichtlich der Flächengröße der Gehäusefront erreicht. Über die dem Lautsprecher innerhalb des Gehäuses vorgeordnete Schallkammer und die seitliche, d. h. im Bereich einer GehäuseSeitenwand angeordnete Schallöffnung wird dennoch eine gute Schallführung erreicht. Vorzugsweise sind aber zwei Schallöffnungen in gegenüberliegenden Seitenwandungen vorgesehen, wobei jede Schallöffnung über einen inneren Schallkanal mit der Schallkammer verbunden ist. Diese Ausgestaltung gewährleistet eine effektive Leitung des Schalls aus dem Gehäuse nach außen.

Weiterhin ist erfindungsgemäß dem Lautsprecher auf seiner von der Schallkammer abgewandten Seite ein akustisches Rückvolumen zugeordnet, wobei dieses Rückvolumen zur Vermeidung eines akustischen Kurzschlusses von der Schallkammer akustisch getrennt (akustisch abgedichtet bzw. isoliert/entkoppelt) ist. Hierdurch ist trotz der sehr kompakten Ausgestaltung und der Unterbringung des Lautsprechers hinter dem Display eine sehr gute akustische Qualität der Audio-Übertragung mit hoher Effizienz der Schallemission des Lautsprechers gewährleistet. Dazu trägt auch das Merkmal bei, dass das Mikrofon innerhalb des Gerätegehäuses derart in einer Aufnahme angeordnet ist, dass as akustish vom rückwärtigen Schall des Lautsprechers entkoppelt ist.

Anhand eines in der Zeichnung veranschaulichten, bevorzugten Ausführungsbeispiels sollen die Erfindung und vorteilhafte Ausgestaltungen im Folgenden genauer erläutert werden. Es zeigen:
- Fig. 1: eine Perspektivansicht eines erfindungsgemäßen Stationsgerätes in einer bevorzugten Ausführung als Video-Wohnungsstation zur Aufputz- Montage (AP-Installation),
- Fig.2: eine perspektivische Explosionsdarstellung der wesentlichen Bestandteile des Gerätes gemäß Fig. 1,
- Fig. 3: eine zweite Explosionsdarstellung ähnlich Fig. 2, aber mit teilmontierten Komponenten und aus anderer Blickrichtung,
- Fig. 4: eine weitere Perspektivansicht in einem weitergehend teilmontierten Zustand bestimmter Bestandteile und
- Fig. 5: eine perspektivische Detail-Explosionsdarstellung im Bereich eines Mikrofons.

In den verschiedenen Figuren der Zeichnung sind gleiche Teile stets mit den gleichen Bezugszeichen versehen.

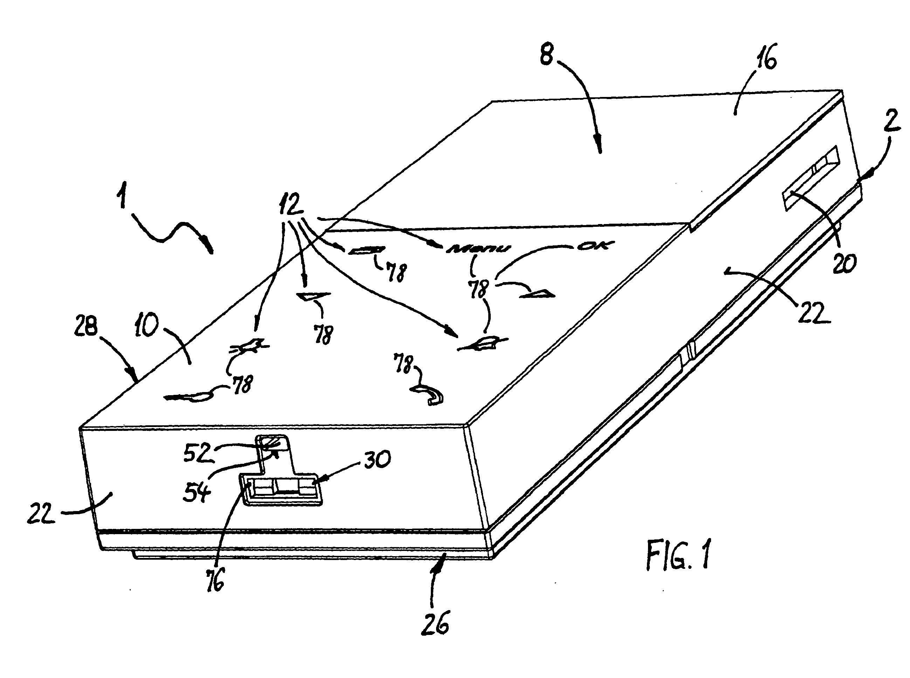

Ein erfindungsgemäßes Stationsgerät 1 (s. den Zusammenbau in Fig. 1) ist Bestandteil einer Hauskommunikationsanlage. Solche Anlagen werden in Gebäuden aus mindestens einer Türstation (im Außenbereich neben einer Haustür) und einer beliebigen Anzahl von Wohnungsstationen installiert, indem alle Stationen bevorzugt über einen gemeinsamen Zweidraht-Bus miteinander verbunden werden. Der Bus ist zur Übertragung von digitalen Steuersignalen und Kommunikationssignalen, und zwar Audio- und Videosignalen, ausgelegt und überträgt bevorzugt zusätzlich auch die Versorgungsspannung von einem zentralen Netzteil an die einzelnen Stationen.

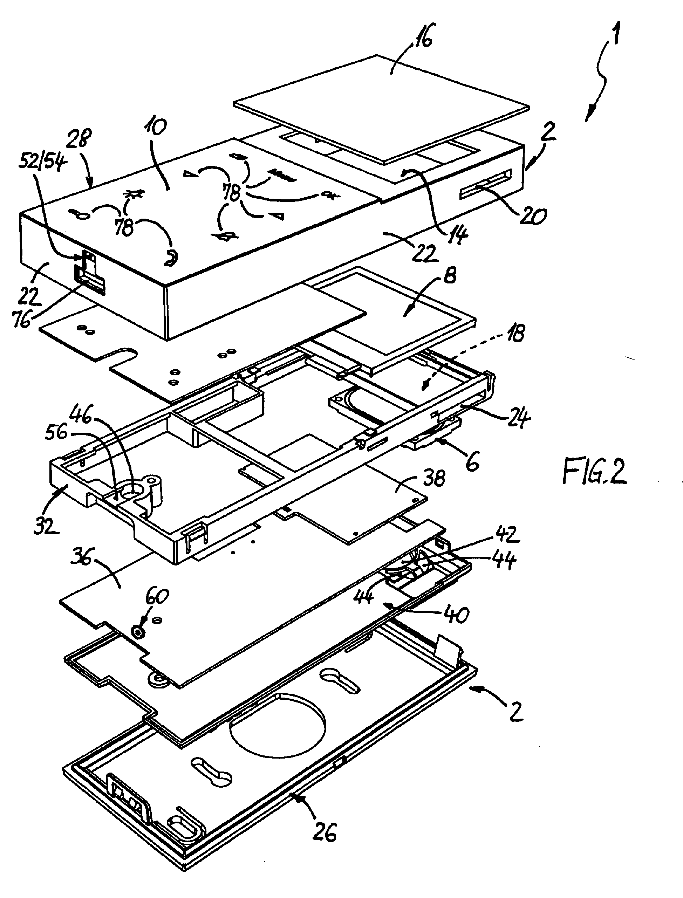

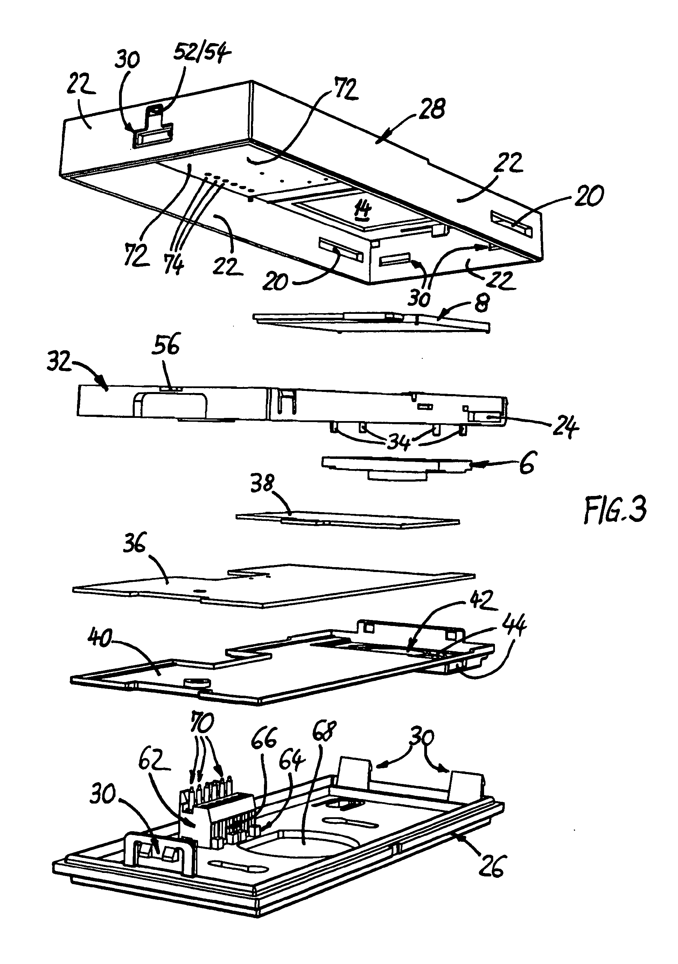

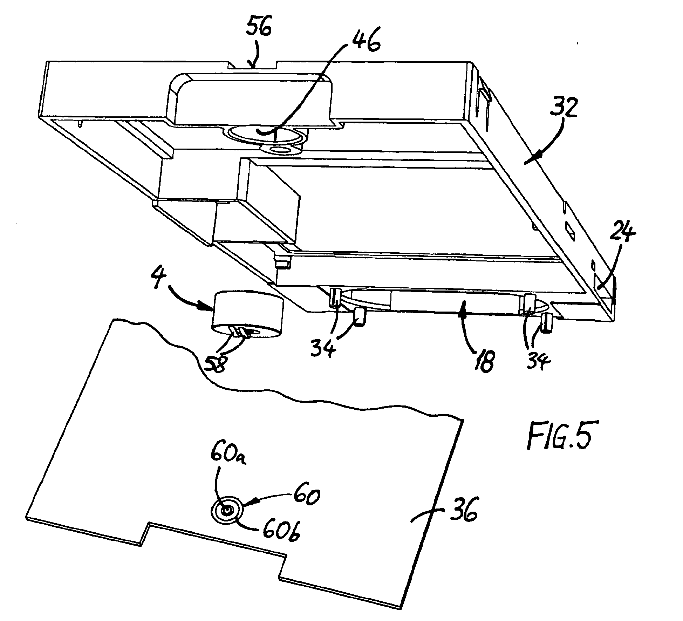

Das erfindungsgemäße Stationsgerät 1 ist insbesondere als Wohnungsstation konzipiert, die im Innenbereich einer Wohnung anzuordnen ist. Das Stationsgerät 1 weist ein Gerätegehäuse 2 sowie Audio-Komponenten mit einem Mikrofon 4 (s. Fig. 5) und einem Lautsprecher 6 (Fig. 2 und 3) auf. Weiterhin weist das Stationsgerät 1 Video-Komponenten mit einem Display 8 zur Darstellung eines Videobildes und/oder eines Benutzermenüs auf. Außerdem sind im Bereich einer Vorderwandung 10 des Gerätegehäuses 2 Bedien- und Anzeigeelemente 12 vorgesehen.

Die Audio-Komponenten mit dem Mikrofon 4 und dem Lautsprecher 6 sind zur Audio-Kommunikation zwischen den Stationen vorgesehen, insbesondere zwischen der Türstation und jeweils mindestens einer Wohnungsstation. Vorzugsweise sind auch Intemverbindungen zwischen jeweils mindestens zwei Wohnungsstationen möglich. Zum Aufbau einer Audio-Verbindung wird zunächst an einer Station, insbesondere der Türstation, über eine Ruftaste ein Rufsignal für eine bestimmte andere Station erzeugt. Die Anlage ist zuvor bei Inbetriebnahme hinsichtlich der Zuordnung zwischen Ruftasten und Stationen programmiert worden, so dass in den Stationen alle über den Bus übertragenen Rufsignale überwacht werden. Die auf die jeweilige Ruftaste programmierte Station erkennt das ihr zugeordnete Signal und erzeugt ein akustisches und/oder optisches Rufsignal. Der Benutzer kann dann durch Betätigen einer Annahmetaste den Ruf annehmen, wodurch eine Audio-Verbindung mit der rufenden Station aufgebaut wird. Das Video-Display 8 des Stationsgerätes 1 dient zur Darstellung eines Videobildes, welches von einer Videokamera der Türstation erzeugt und in Form eines vorzugsweise außerhalb des hörbaren Frequenzbereiches modulierten Videosignals über den Bus übertragen wird.

Wie sich weiterhin aus Fig. 2 und 3 ergibt, ist das Display 8 bevorzugt von einem flachen TFT- oder LCD-Monitor gebildet. Dabei wird das Display 8 unmittelbar unterhalb der Vorderwandung 10 des Gerätegehäuses 2 im Bereich einer Gehäuseöffnung 14 untergebracht. Die Gehäuseöffnung 14 mit dem Display 8 wird dann bevorzugt von einer äußeren transparenten Abdeckung 16 überdeckt.

Erfindungsgemäß ist nun vorgesehen, dass der Lautsprecher 6 innerhalb des Gehäuses 2 in einem zur vorderen Geräte-Sichtseite hin von dem Display 8 überdeckten Bereich, d. h. "unterhalb" des Displays 8, angeordnet ist. Hierbei ist dem Lautsprecher 6 eine Schallkammer 18 (s. hierzu insbesondere Fig. 2 und 5) mit mindestens einer seitlichen Gehäuse-Schallöffnung 20 zugeordnet. In bevorzugter Ausgestaltung weist das Gehäuse 2 im Bereich von zwei gegenüberliegenden Seitenwandungen 22 jeweils eine von zwei Schallöffnungen 20 auf, wobei jede Schallöffnung 20 mit der Schallkammer 18 über einen Schallkanal 24 verbunden ist. Die Schallkammer 18 und/oder der bzw. jeder Schallkanal 24 kann vorzugsweise nicht dargestellte Formelemente zur Beeinflussung / Führung des Schalls enthalten.

In einer besonderen Ausgestaltung ist dem Lautsprecher 6 auf seiner von der Schallkammer 18 abgewandten Seite ein akustisches Rückvolumen zugeordnet, wobei dieses Rückvolumen zur Vermeidung eines akustischen Kurzschlusses von der Schallkammer 18 akustisch getrennt ist. Dies wird im Folgenden noch genauer erläutert werden.

In der dargestellten, bevorzugten Ausführungsform ist das Gerätegehäuse 2 zur Montage auf einer Wandfläche konzipiert (so genannte AP-Montage bzw. Aufputz-Montage). Dazu besteht das Gerätegehäuse 2 aus einem Montage-Basisteil 26 und einem Gehäuse-Vorderteil 28. Das Vorderteil 28 ist flach haubenartig ausgebildet und besteht aus der rechteckigen Vorderwandung 10 und vier dazu senkrechten Seitenwandungen 22. Das Basisteil 26 ist als Grundplatte über geeignete Befestigungsmittel an einer Wandfläche befestigbar. Das Vorderteil 28 ist dann über Rastmittel 30 an dem plattenartigen Basisteil 26 befestigbar (aufrastbar). Wie dargestellt kann beispielsweise das Basisteil 26 als Rastmittel federnde Rastelemente aufweisen, die in zugehörige Rastöffnungen des Vorderteils 28 eingreifen.

Wie sich aus den Explosionsdarstellungen in Fig. 2 bis 5 ergibt, nimmt das Vorderteil 28 ein rahmenartiges Trägerteil 32 auf. Dieses Trägerteil 32 trägt wesentliche Funktionsteile des Stationsgerätes 1 und insbesondere auch den Lautsprecher 6. Das Trägerteil 32 weist zudem auch die Schallkammer 18 mit seitlichen Schallkanälen 24 auf, wobei die Schallkanäle 24 in jeweils eine der Schallöffnungen 20 des Vorderteils 28 des Gehäuses 2 übergehen, wenn das Trägerteil 32 in das Vorderteil 28 eingesetzt ist. Die Schallkammer 18 ist am besten in Fig. 5 zu erkennen. In diesem Bereich weist das Trägerteil 32 Haltelemente 34 für den Lautsprecher 6 auf. Der Lautsprecher 6 wird auf dieser Seite so an dem Trägerteil 32 befestigt, dass er mit seiner Membran direkt in die Schallkammer 18 gerichtet ist. Über die Schallkanäle 24 und die Schallöffnungen 20 gelangt der Schall aus dem Stationsgerät 1 nach außen.

Das Trägerteil 32 trägt weiterhin eine Haupt-Leiterplatte 36 (Mainboard mit nicht im Einzelnen dargestellten elektronischen Bestandteilen) sowie vorzugsweise eine separate Grafikkarte 38 für das Display 8, wobei das Display 8 selbst ebenfalls von dem Trägerteil 32 gehalten wird. Im montierten Zustand liegt die Grafikkarte 38 direkt unterhalb des Displays 8 und kann direkt über Anlagekontakte kontaktiert sein. Die Grafikkarte 38 enthält eine nicht genauer dargestellte elektronische Ansteuereinrichtung für das Display 8.

Zwischen dem Basisteil 26 und dem Trägerteil 32 ist ein plattenartiges Abdeckteil 40 als "Platinenabdeckung" angeordnet. Dieses Abdeckteil 40 ist vorzugsweise im Bereich des Lautsprechers 6 zur Bildung des akustischen Rückvolumens ausgestaltet. Dazu weist das Abdeckteil 40 einen Aufnahmeraum 42 für den rückwärtigen Bereich des Lautsprechers 6 auf. Hierzu wird insbesondere auf Fig. 2 bis 4 verwiesen. Dieser Aufnahmeraum 42 ist von der Schallkammer 18 akustisch entkoppelt. Bei der dargestellten Ausführungsform weist das Abdeckteil 40 im Bereich des Lautsprecher-Aufnahmeraums 42 mindestens eine akustisch wirksame Öffnung 44 auf, so dass das akustische Rückvolumen hauptsächlich im Bereich zwischen dem Abdeckteil 40 und dem Basisteil 26 gebildet ist.

Bevorzugt ist es ebenfalls möglich, das Abdeckteil 40 im Bereich des Aufnahmeraums 42 öffnungsfrei derart auszubilden, dass das akustische Rückvolumen hauptsächlich im Bereich zwischen dem Abdeckteil 40, dem Trägerteil 32 und dem Vorderteil 28, d. h. folglich in dem die Leiterplatten aufnehmenden Bereich gebildet ist. Der besondere Vorteil dieser Ausführung liegt darin, dass die Dichtigkeit des Rückvolumens unabhängig von der Beschaffenheit des Basisteils 26 (Grundplatte) und dessen Halterung auf einer Wand ist.

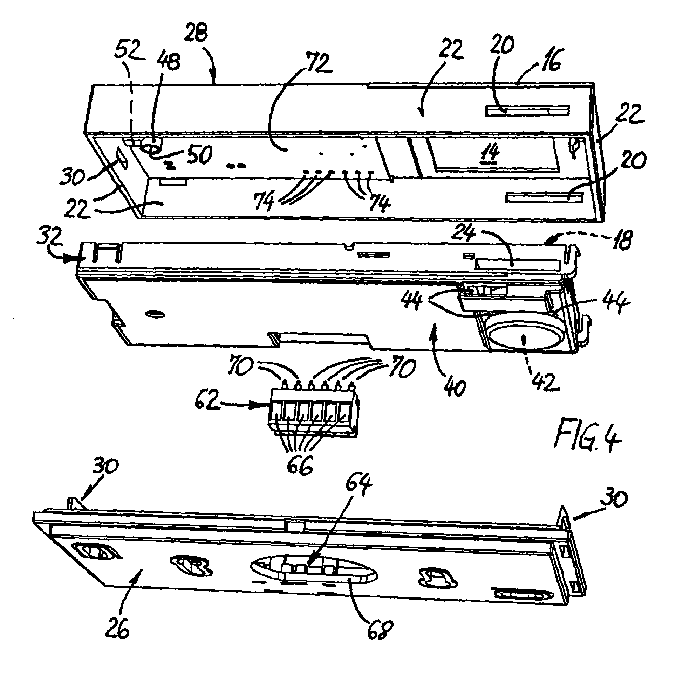

In weiterer vorteilhafter Ausgestaltung ist vorgesehen, dass das Mikrofon 4 innerhalb des Gerätegehäuses 2 derart in einer Aufnahme 46 angeordnet ist, dass es akustisch vom Schall des Lautsprechers 6, und zwar insbesondere von dessen rückwärtigem Schall im Bereich des Rückvolumens, weitgehend entkoppelt ist. Das nur in Fig. 5 dargestellte Mikrofon 4 ist als kleine zylindrische Kapsel ausgebildet. Die Aufnahme 46 ist insbesondere von einer zur Aufnahme und Halterung des Mikrofons 4 ausgelegten Öffnung des Trägerteils 32 gebildet. Gemäß Fig. 4 weist das Gehäuse-Vorderteil 28 auf der Innenseite der Vorderwandung 10 einen Ringkragen 48 auf. Im montierten, in das Vorderteil 28 eingesetzten und vorzugsweise verrasteten Zustand des Trägerteils 32 greift der Ringkragen 28 umfangsgemäß dichtend in die das Mikrofon 4 haltende Öffnung 46 des Trägerteils 32 ein. Somit vergrößert praktisch der Ringkragen 48 die Aufnahme 46 zur Bildung einer Schallkammer 50. Diese Schallkammer 50 geht in einen Schallkanal 52 über, der über eine Gehäuse-Schallöffnung 54 nach außen mündet. Dabei ist der Schallkanal 52 vorzugsweise durch eine einstückig angeformte Wandung innerhalb des Vorderteils 28 gebildet. Die Schallöffnung 54 ist insbesondere in der Seitenwandung 22 gebildet, die bei bestimmungsgemäßer Montage vertikal nach unten weist. Wie sich noch aus Fig. 2 und 5 ergibt, weist das Trägerteil 32 ausgehend von der Aufnahme 46 eine nutartige Ausnehmung 56 für den Schallkanal 52 des Gehäuse-Vorderteils 28 auf.

Das Mikrofon 4 ist über elektrische Anschlüsse 58 an einer Leiterplatte, insbesondere an der Haupt-Leiterplatte 36 angeschlossen, wobei die Anschlüsse 58 vorzugsweise von federnden Anlagekontaktelementen gebildet sind, die elektrisch leitend auf Kontaktflächen 60 der Leiterplatte 36 zur Auflage kommen. Die Kontaktierung des Mikrofons 4 erfolgt somit allein durch Zusammenfügen der Bestandteile, indem die Leiterplatte 36 mit dem das Mikrofon 4 aufnehmenden Trägerteil 32 verbunden wird. Hierbei ist es weiterhin vorteilhaft, wenn die Kontaktflächen 60 zueinander konzentrisch ausgebildet sind. Dies bedeutet, dass eine innere Kontaktfläche 60a etwa kreisförmig und eine äußere Kontaktfläche 60b dazu konzentrisch kreisringförmig ausgebildet sind. Hierzu wird insbesondere auf Fig. 5 verwiesen. Die Anlagekontakt-Anschlüsse 58 des Mikrofons 4 sind hierbei derart ausgebildet und angeordnet, dass der eine Anschluss die innere Kontaktfläche 60a und der andere Anschluss die äußere Kontaktfläche 60b kontaktiert, und zwar vorteilhafterweise unabhängig von der Drehausrichtung des Mikrofons 4 innerhalb der Aufnahme 36. Dies führt zu einer sehr einfachen Montage, zumal sich auch Anschlussleitungen für das Mikrofon erübrigen.

Es ist weiterhin vorteilhaft, wenn das Mikrofon 4 eine äußere Kapselung aus einem gummielastischen Material aufweist. Hierdurch ist einerseits eine gute Halterung innerhalb der Aufnahme 46 gewährleistet und andererseits auch eine gute akustische Abdichtung, indem der Ringkragen 48 des Gehäuse-Vorderteils 28 dicht zur Anlage auf der gummielastischen Kapselung des Mikrofons 4 gelangt.

In Fig. 3 und 4 ist eine weitere vorteilhafte Ausgestaltung veranschaulicht. An bzw. auf dem Basisteil 26 ist ein elektrisches Anschlussteil 62 gehaltert, und zwar vorzugsweise über Rastmittel 64. Das Anschlussteil 62 weist einerseits elektrische Anschlussklemmen 66 für nicht dargestellte elektrische Leitungen auf. Es kann sich bevorzugt um Schraubklemmen, alternativ aber auch um Steckklemmen handeln. Auf Grund der AP-Montage weist das Basisteil 28 mindestens eine Durchführöffnung 68 für aus einer Gebäudewand geführte Leitungen auf. Das Anschlussteil 62 weist mindestens zwei Anschlussklemmen 66 für den Zweidraht-Bus auf. Vorzugsweise sind zwei weitere Anschlussklemmen 66 für einen nicht dargestellten, außerhalb einer Wohnung insbesondere vor einer Wohnungs-Eingangstür angeordneten Etagen-Ruftaster vorgesehen. Schließlich können zwei weitere Anschlussklemmen 66 für eine Zusatz-Spannungsversorgung vorhanden sein. Somit sind in bevorzugter Ausgestaltung sechs Anschlussklemmen 66 vorhanden. Die Anschlussklemmen 66 des Anschlussteils 62 sind vorzugsweise über federnde Anlagekontaktelemente 70 mit einer in dem Vorderteil 28 des Gerätegehäuses 2 angeordneten Leiterplatte 72 elektrisch verbunden. Bei dieser Leiterplatte 72 handelt es sich bevorzugt um ein so genanntes "Keyboard"; diese Leiterplatte 72 trägt auch Schaltelemente, und zwar insbesondere kapazitive Schaltelemente sowie Leuchtelemente im Bereich der Bedien-und Anzeigelemente 12. Die Leiterplatte 72 ist bevorzugt in das Gehäuse-Vorderteil 28 eingeklebt. Alternativ zu einem Verkleben kann die Leiterplatte 72 auch mechanisch an das Vorderteil 28 gedrückt werden. Die Anlagekontaktelemente 70 sind als teleskopartig längenvariable Federstifte ausgebildet, die im Wesentlichen senkrecht zu der Leiterplatte 72 ausgerichtet sind. Wie dargestellt sind bevorzugt die Anlagekontaktelemente 70 Bestandteile des Anschlussteils 62, während die Leiterplatte 72 zugehörige Kontaktflächen 74 zum elektrischen Anlagekontakt der Anlagekontaktelemente 70 aufweist. Grundsätzlich kann dies aber auch umgekehrt sein. Durch diese vorteilhafte Ausgestaltung werden über das Anschlussteil 62 die daran angeschlossenen Leitungen mit der Elektronik des Stationsgerätes 1 auf sehr einfache Weise dadurch verbunden, dass die Bestandteile nur zusammengefügt werden müssen, wobei die Verbindungen über die durch Federkraft auf den Kontaktflächen 74 aufliegenden Kontaktelemente 70 hergestellt werden. Es können interne Verbindungsleitungen und elektrische Steckverbindungen vorteilhafterweise entfallen. Die bevorzugte Verbindungsart ist auch noch aus einem zusätzlichen Grund vorteilhaft. Bei den verwendeten Rastmitteln 30 zwischen Basisteil 26 und Vorderteil 28 erfolgt ein Lösen des Vorderteils 28, indem die auf einer (unteren) Seite vorgesehenen Rastmittel 30 durch eine Gehäuseöffnung 76 hindurch gelöst bzw. entriegelt werden können. Dadurch kann das Vorderteil 28 dann mit dieser (unteren) Seite nach vorne verschwenkt werden, bis das Vorderteil 28 auch in seinem gegenüberliegenden (oberen) Bereich von den Rastmitteln 30 freikommt. Die erfindungsgemäßen Anlagekontaktelemente 70 lassen diese relative Schwenkbewegung ohne Probleme zu.

Im Bereich der in der Zeichnung nicht erkennbaren kapazitiven Schaltelemente der Leiterplatte 72 weist die Gehäuse-Vorderwandung 10 in ihren jeweils eines der Schaltelemente überdeckenden Bereichen lichtdurchlässige Leuchtsymbole 78 auf. Zur manuellen Betätigung der Schaltelemente braucht ein Bediener lediglich mit seinem Finger die Vorderwandung 10 im Bereich eines der Leuchtsymbole 78 leicht zu berühren. Im Bereich der Leuchtsymbole 78 weist die Leiterplatte 72 zusätzlich zu den Schaltelementen zugehörige Leuchtmittel auf. Vorzugsweise sind als Leuchtmittel jedem Leuchtsymbol 78 zwei benachbarte Leuchtdioden zugeordnet (in der Zeichnung nicht dargestellt), wodurch eine verbesserte Flächenausleuchtung der Leuchtsymbole 78 erreicht wird.

In einer weiteren besonderen Ausgestaltung weist das Stationsgerät 1 benutzerseitig aktivierbare oder deaktivierbare Mittel für eine automatische Annahme eines von einem anderen Stationsgerät innerhalb der Hauskommunikationsanlage eingehenden Rufes durch automatisches Aufbauen einer Audio-Verbindung als Reaktion auf den eingehenden Ruf auf. Dies bedeutet, dass in einem aktivierten Zustand der Mittel zur automatischen Rufannahme bei einem eingehenden Ruf die Audio-Verbindung selbsttätig hergestellt wird, ohne dass zum Verbindungsaufbau ein Bedienelement betätigt werden müsste. In einem Auslieferzustand des Stationsgerätes 1 ist diese Funktion für den Benutzer nicht zugänglich, indem ein entsprechender Menüpunkt in einem auf dem Display dargestellten Benutzermenü nicht erscheint. Eine Freischaltung der Funktion erfolgt durch einen Installateur bei der Inbetriebnahme der Hauskommunikationsanlage auf Kundenwunsch. Erst nach dieser Freischaltung erscheint im Benutzermenü der Punkt "Automatische Rufannahme". Diese Funktion kann dann von dem Benutzer im Menü entsprechend aktiviert oder deaktiviert werden. In Kombination mit dieser Funktion ist es vorteilhaft, den Tonruf abschalten zu können. Auch dies erfolgt über das Benutzermenü. Über die Anzeigeelemente 12 kann der jeweilige Betriebszustand optisch signalisiert werden, beispielsweise über das Leuchtsymbol 78 in Form einer durchgestrichenen Glocke. Wenn dieses Leuchtsymbol dauerleuchtet, ist die Rufabschaltung aktiviert (Tonruf aus), und die automatische Rufannahme ist deaktiviert. Bei dauerhaft ausgeschaltetem Leuchtsymbol sind beide Funktionen deaktiviert, d. h. keine automatische Rufannahme und normaler Tonruf. Durch ein Blinken des LED-Signals wird signalisiert, dass die automatische Rufannahme aktiv ist. Um auch eine Aussage über den Zustand der Rufabschaltung zu erhalten, kann vorgesehen sein, durch kurze Betätigung des zugehörigen Schaltelementes von dem blinkenden Zustand für eine bestimmte Zeit von beispielsweise zwei Sekunden in einen anderen Anzeigemodus umzuschalten. Wenn dann für diese kurze Zeit das Signal leuchtet, ist die Rufabschaltung aktiviert, und wenn das Signal nicht leuchtet, ist die Rufabschaltung nicht aktiv. Bei aktivierter automatischer Rufannahme wird nach vollständigem Ablauf des Tonrufs, d. h. bevorzugt mit einer Verzögerung von etwa zwei Sekunden, die Audioverbindung selbsttätig hergestellt.

Es sei noch bemerkt, dass die automatische Rufannahme vorzugsweise auf Intemrufe beschränkt ist, d. h. auf Verbindungen zwischen Wohnungsstationen.

Die automatische Rufannahme gestattet im Rahmen einer Hauskommunikationsanlage einen Aufbau einer Sprechverbindung ohne Bedienung an der gerufenen Station, z. B. für Büros, Kinderzimmer (Babyfon-Funktion), Arztpraxen und dergleichen.

Wie oben bereits erwähnt wurde, kann optional über das Anschlussteil 62 eine Zusatz-Spannungsversorgung von insbesondere 24 Volt an das Gerät 1 angeschlossen werden. In diesem Fall steht unabhängig von der Versorgung über den Zweidraht-Bus stets genügend Leistung zur Verfügung.

In vorteilhafter Ausgestaltung kann dabei das Stationsgerät 1 Mittel für eine automatische (dynamische) Erkennung der angeschlossenen Zusatzversorgung aufweisen. Wenn diese Erkennungsmittel das Vorhandensein der Zusatz-Versorgungsspannung feststellen, können automatisch bestimmte Zusatzfunktionen der Station 1 freigegeben werden. Dies betrifft insbesondere die Aktivierung des Displays 8 unabhängig von dem Betriebszustand der anderen Stationen innerhalb der Anlage. Bei Versorgung der Stationen allein über den Bus wäre die Leistung begrenzt, so dass beispielsweise nicht alle Displays aller Stationen gleichzeitig in Betrieb sein könnten. Bei angeschlossener und automatisch erkannter Zusatzversorgung können auch beliebige Internrufe und sonstige Schaltfunktionen (beispielsweise Steuerung von Treppenhauslicht, Türöffner und dergleichen) freigegeben und dann über das Display menügeführt gesteuert werden. Außerdem können optional bestimmte Betriebszustände - zusätzlich zu den Anzeigeelementen 12 - auch auf dem Display insbesondere verbal angezeigt werden.

Die Erfindung ist nicht auf die dargestellten und beschriebenen Ausführungsbeispiele beschränkt, sondern umfasst auch alle im Sinne der Erfindung gleichwirkenden Ausführungen. Insbesondere ist die Erfindung nicht nur für Bus-Systeme, sondern auch für andere Verdrahtungssysteme geeignet, z. B. Mehrdrahtsysteme, wie so genannte 1+n-Anlagen, oder Ethemet-Systeme (TCP/IP) oder auch Funk-Anlagen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, dass grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Stationsgerät (1), für eine Hauskommunikationsanlage, mit einem Gerätegehäuse (2), mit Audio-Komponenten mit einem Mikrofon (4) und einem Lautsprecher (6) für eine Audio-Kommunikation sowie mit Video-Komponenten mit einem Display (8) zur Darstellung eines Videobildes und/oder eines Benutzermenüs,
**dadurch gekennzeichnet,**
**dass** der Lautsprecher (6) innerhalb des Gehäuses (2) in einem zu einer vorderen Geräte-Sichtseite hin von dem Display (8) überdeckten Bereich angeordnet ist, wobei dem Lautsprecher (6) eine Schallkammer (18) mit mindestens einer seitlichen Gehäuse-Schallöffnung (20) zugeordnet ist,
**dass** dem Lautsprecher (6) auf seiner von der Schallkammer (18) abgewandten Seite ein akustisches Rückvolumen zugeordnet ist, wobei das Rückvolumen zur Vermeidung eines akustischen Kurzschlusses von der Schallkammer (18) akustisch getrennt ist, und
**dass** das Mikrofon (4) zur akustischen Entkoppelung von dem rückwärtigen Schall des Lautsprechers (6) im Bereich des Rückvolumens in einer innerhalb des Gerätegehäuses (2) gebildeten Aufnahme (46) angeordnet ist.

2. Stationsgerät nach Anspruch 1,
**dadurch gekennzeichnet, dass** das Gehäuse (2) im Bereich von zwei gegenüberliegenden Seitenwandungen (22) jeweils eine von zwei Schallöffnungen (20) aufweist, wobei jede Schallöffnung (20) über einen Schallkanal (24) mit der Schallkammer (18) verbunden ist.

3. Stationsgerät nach Anspruch 1 oder 2,
**dadurch gekennzeichnet, dass** dasGerätegehäuse(2)zur Montage auf einer Wandfläche konzipiert ist und dazu aus einem Montage-Basisteil (26) und einem Gehäuse-Vorderteil (28) besteht

4. Stationsgerät nach Anspruch 3,
**dadurch gekennzeichnet, dass** das Vorderteil (28) haubenartig aus einer Vorderwandung (10) und vier Seitenwandungen (22) besteht und über Rastmittel (30) an dem plattenartigen Basisteil (26) befestigt oder befestigbar ist.

5. Stationsgerät nach Anspruch 4.
**dadurch gekennzeichnet, dass** das Vorderteil (28) ein rahmenartiges, wesentliche Funktionsteile tragendes Trägerteil (32) aufnimmt, wobei das Trägerteil (32) den Lautsprecher (6) trägt und die Schallkammer (18) mit seitlichen Schallkanälen (24) aufweist.

6. Stationsgerät nach Anspruch 5,
**dadurch gekennzeichnet, dass** das Trägerteil (32) eine Haupt-Leiterplatte (36) und eine separate Grafikkarte (38) für das Display (8) sowie das Display (8) trägt.

7. Stationsgerät nach Anspruch 5 oder 6.
**dadurch gekennzeichnet, dass** zwischen dem Basisteil (26) und dem Trägerteil (32) ein plattenartiges Abdeckteil (40) angeordnet ist, wobei das Abdeckteil (40) im Bereich des Lautsprechers (6) zur Bildung des akustischen Rückvolumens ausgestaltet ist.

8. Stationsgerät nach Anspruch 7,
**dadurch gekennzeichnet, dass** das Abdeckteil (40) einen Aufnahmeraum (42) für den rückwärtigen Bereich des Lautsprechers (6) aufweist, wobei der Aufnahmeraum (42) von der Schallkammer (18) akustisch entkoppelt ist.

9. Stationsgerät nach Anspruch 8,
**dadurch gekennzeichnet, dass** das Abdeckteil (40) im Bereich des Aufnahmeraums (42) mindestens eine Öffnung (44) aufweist, so dass das akustische Rückvolumen im Bereich zwischen dem Abdeckteil (40) und dem Basisteil (26) gebildet ist.

10. Stationsgerät nach Anspruch 8,
**dadurch gekennzeichnet, dass** das Abdeckteil (40) im Bereich des Aufnahmeraums (42) öffnungsfrei derart ausgebildet ist, dass das akustische Rückvolumen im Bereich zwischen dem Abdeckteil (40), dem Trägerteil (32) und dem Vorderteil (28) gebildet ist.

11. Stationsgerät nach einem der Ansprüche 1 bis 10,
**dadurch gekennzeichnet, dass** dem in der Aufnahme (46) sitzenden Mikrofon (4) eine Schallkammer (50) mit einem zu einer Gehäuse-Schallöffnung (54) führenden Schallkanal (52) vorgeordnet ist.

12. Stationsgerät nach einem der Ansprüche 1 bis 11,
**dadurch gekennzeichnet, dass** das Mikrofon (4) über elektrische Anschlüsse (58) an einer Leiterplatte (36) angeschlossen ist, wobei die Anschlüsse (58) von federnden Anlagekontaktelementen gebildet sind, die elektrisch leitend auf zueinander konzentrischen Kontaktflächen (60) der Leiterplatte (36) aufliegen.

13. Stationsgerät nach einem der Ansprüche 3 bis 12,
**dadurch gekennzeichnet, dass** an dem Basisteil (26) ein Anschlussteil (62) mit Anschlussklemmen (66) für elektrische Leitungen gehaltert ist, wobei das Anschlussteil (62) über federnde Anlagekontaktelemente (70) mit einer in dem Vorderteil (28) angeordneten Leiterplatte (72) elektrisch verbunden ist.

14. Stationsgerät nach Anspruch 13.
**dadurch gekennzeichnet, dass** die Anlagekontaktelemente (70) als Federstifte ausgebildet sind, die senkrecht zu der Leiterplatte (72) ausgerichtet sind.

15. Stationsgerät nach Anspruch 14,
**dadurch gekennzeichnet, dass** die Anlagekontaktelemente (70) Bestandteile des Anschlussteils (62) sind, während die Leiterplatte (72) Kontaktflächen (74) zum elektrischen Anlagekontakt der Anlagekontaktelemente (70) aufweist.

16. Stationsgerät nach einem der Ansprüche 1 bis 15,
**dadurch gekennzeichnet, dass** innerhalb des Gerätegehäuses (2) direkt unterhalb der Vorderwandung (10) des Gehäuse-Vorderteils (28) auf einer Leiterplatte (72) kapazitive Schakelemente angeordnet sind, wobei die Vorderwandung (10) in ihren jeweils eines der Schaltelemente überdeckenden Bereichen lichtdurchlässige Leuchtsymbole (78) und die Leiterplatte (72) zugehörige Leuchtmittel aufweisen, wobei als Leuchtmittel jedem Leuchtsymbol (78) zwei benachbarte Leuchtdioden zugeordnet sind.

17. Stationsgerät nach einem der Ansprüche 1 bis 16,
**gekennzeichnet durch** benutzerseitig aktivierbare oder deaktivierbare Mittel für eine automatische Annahme eines von einem anderen Stationsgerät innerhalb der Hauskommunikationsanlage eingehendes Rufes durch automatisches Aufbauen einer Audio-Verbindung als Reaktion auf den eingehenden Ruf.

18. Stationsgerät nach einem der Ansprüche 13 bis 17,
**dadurch gekennzeichnet, dass** das Anschlussteil (62) zwei Anschlüsse (66) für eine Zweidraht-Busleitung, zwei weitere Anschlüsse (66) für einen externen Etagen-Ruftaster sowie zwei zusätzliche Anschlüsse (66) für eine Zusatz-Spannungsversorgung aufweist, wobei Mittel zur selbsttätigen Erkennung der Zusatz-Spannungsversorgung vorgesehen sind.

## Claims

1. A station apparatus (1) for a building intercom system, having an apparatus housing (2), having audio components with a microphone (4) and a speaker (6) for audio communication as well as with video components with a display (8) to show a video image and/or a user menu, **characterised in that** the speaker (6) is arranged within the housing (2) in a region which is covered by the display (8) towards a front apparatus visible face, wherein a sound chamber (18) with at least one lateral housing sound hole (20) is associated with the speaker (6), **in that** an acoustic back volume is associated with the speaker (6) on its side remote from the sound chamber (18), wherein the back volume is acoustically separate from the sound chamber (18) to avoid an acoustic short circuit, and **in that** the microphone (4) is, for the purpose of acoustic uncoupling from the rear sound of the speaker (6) in the region of the back volume, arranged in a receiver (46) formed within the apparatus housing (2).

2. A station apparatus according to claim 1, **characterised in that** in the region of two opposite lateral walls (22), the housing (2) has in each case one of two sound holes (20), wherein each sound hole (20) is connected to the sound chamber (18) via a sound channel (24).

3. A station apparatus according to claim 1 or 2, **characterised in that** the apparatus housing (2) is designed for mounting on a wall surface and for that purpose consists of a mounting base part (26) and a housing front part (28).

4. A station apparatus according to claim 3, **characterised in that** the front part (28) consists in a hood-like manner of a front wall (10) and four lateral walls (22) and is secured or securable to the plate-like base part (26) via locking means (30).

5. A station apparatus according to claim 4, **characterised in that** the front part (28) receives a frame-like bearer part (32) bearing essential functional parts, wherein the bearer part (32) bears the speaker (6) and has the sound chamber (18) with lateral sound channels (24).

6. A station apparatus according to claim 5, **characterised in that** the bearer part (32) bears a main printed circuit board (36) and a separate graphics card (38) for the display (8) as well as the display (8).

7. A station apparatus according to claim 5 or 6, **characterised in that** between the base part (26) and the bearer part (32) there is arranged a plate-like cover part (40), wherein the cover part (40) is in the region of the speaker (6) fashioned to form the acoustic back volume.

8. A station apparatus according to claim 7, **characterised in that** the cover part (40) has a receiving space (42) for the rear region of the speaker (6), wherein the receiving space (42) is acoustically uncoupled from the sound chamber (18).

9. A station apparatus according to claim 8, **characterised in that** the cover part (40) has at least one opening (44) in the region of the receiving space (42), so that the acoustic back volume is formed in the region between the cover part (40) and the base part (26).

10. A station apparatus according to claim 8, **characterised in that** the cover part (40) is opening-free in the region of the receiving space (42) in such a manner that the acoustic back volume is formed in the region between the cover part (40), the bearer part (32) and the front part (28).

11. A station apparatus according to any one of claims 1 to 10, **characterised in that** a sound chamber (50) with a sound channel (52) running to a housing sound hole (54) is arranged upstream of the microphone (4) in the receiver (46).

12. A station apparatus according to any one of claims 1 to 11, **characterised in that** the microphone (4) is connected to a printed circuit board (36) via electric connections (58), wherein the connections (58) are formed by resilient bearing contact elements which rest on contact surfaces (60), concentric to one another, of the printed circuit board (36) in an electrically conductive manner.

13. A station apparatus according to any one of claims 3 to 12, **characterised in that** a connecting part (62) with connecting terminals (66) for electrical lines is made fast on the base part (26), wherein the connecting part (62) is electrically connected via resilient bearing contact elements (70) to a printed circuit board (72) arranged in the front part (28).

14. A station apparatus according to claim 13, **characterised in that** the bearing contact elements (70) are in the form of spring pins directed perpendicular to the printed circuit board (72).

15. A station apparatus according to claim 14, **characterised in that** the bearing contact elements (70) are components of the connecting part (62), while the printed circuit board (72) has contact surfaces (74) for electrical bearing contact of the bearing contact elements.

16. A station apparatus according to any one of claims 1 to 15, **characterised in that** within the apparatus housing (2), directly below the front wall (10) of the housing front part (28), capacitive switching elements are arranged on a printed circuit board (72), wherein the front wall (10) has light-pervious luminous symbols (78) in its regions covering respective switching elements and the printed circuit board (72) has associated illuminants, wherein two adjacent light-emitting diodes are associated with each luminous symbol (78) as illuminants.

17. A station apparatus according to any one of claims 1 to 16, **characterised by** means, activatable or deactivatable by the user, for automatic acceptance of an incoming call from another station apparatus within the building intercom system through automatic establishment of an audio connection as a reaction to the incoming call.

18. A station apparatus according to any one of claims 13 to 17, **characterised in that** the connecting part (62) has two connections (66) for a two-wire bus line, two further connections (66) for an external storey call button as well as two additional connections (66) for an additional voltage supply, wherein means for automatic detection of the additional voltage supply are provided.

## Revendications

1. Appareil de station (1) pour une installation de communication domestique, comportant un boîtier d'appareil (2), des composants audio dotés d'un microphone (4) et d'un haut-parleur (6) pour une communication audio ainsi que des composants vidéo dotés d'un écran (8) servant à afficher une image vidéo et/ou un menu d'utilisation,
**caractérisé en ce que**
le haut-parleur (6) est disposé à l'intérieur du boîtier (2) dans une zone recouverte par l'écran (8) en direction d'un côté visible avant de l'appareil, dans lequel une chambre acoustique (18), dotée au moins d'une ouverture acoustique latérale dans le boîtier (20), est associée au haut-parleur (6),
un volume acoustique arrière est associé au haut-parleur (6) sur son côté opposé à la chambre acoustique (18), dans lequel le volume arrière est séparé de manière acoustique de la chambre acoustique (18) pour éviter un court-circuit acoustique, et **en ce que**
le microphone (4) servant au découplage acoustique du son arrière du haut-parleur (6) est disposé dans la zone du volume arrière dans un logement (46) formé à l'intérieur du boîtier d'appareil (2).

2. Appareil de station selon la revendication 1,
**caractérisé en ce que** le boîtier (2) présente, dans l'intervalle entre deux parois latérales (22) se faisant face, respectivement une des deux ouvertures acoustiques (20), dans lequel chaque ouverture acoustique (20) est reliée à la chambre acoustique (18) par l'intermédiaire d'un canal acoustique (24).

3. Appareil de station selon la revendication 1 ou 2,
**caractérisé en ce que** le boîtier d'appareil (2) est développé pour être monté sur une surface murale et se compose à cet effet d'une partie de base de montage (26) et d'une partie avant de boîtier (28).

4. Appareil de station selon la revendication 3,
**caractérisé en ce que** la partie avant (28) se compose à la manière d'un capot d'une paroi avant (10) et de quatre parois latérales (22), et est fixée ou peut être fixée au niveau de la partie de base (26) en forme de plaque par l'intermédiaire d'éléments de verrouillage (30).

5. Appareil de station selon la revendication 4,
**caractérisé en ce que** la partie avant (28) reçoit une partie porteuse (32) en forme de châssis, supportant les parties de fonctions essentielles,
dans lequel la partie porteuse (32) supporte le haut-parleur (6) et comporte la chambre acoustique (18) dotée de canaux acoustiques (24) latéraux.

6. Appareil de station selon la revendication 5,
**caractérisé en ce que** la partie porteuse (32) comporte la carte de circuits imprimés principale (36) et une carte graphique séparée (38) pour l'écran (8) ainsi que l'écran (8).

7. Appareil de station selon la revendication 5 ou 6,
**caractérisé en ce qu'**une partie de recouvrement (40) en forme de plaque est disposée entre la partie de base (26) et la partie porteuse (32), dans lequel la partie de recouvrement (40) dans la zone du haut-parleur (6) est configurée pour former le volume acoustique arrière.

8. Appareil de station selon la revendication 7,
**caractérisé en ce que** la partie de recouvrement (40) présente une chambre de réception (42) pour la zone arrière du haut-parleur (6), dans lequel la chambre de réception (42) est découplée de manière acoustique de la chambre acoustique (18).

9. Appareil de station selon la revendication 8,
**caractérisé en ce que** la partie de recouvrement (40) présente dans la zone de la chambre de réception (42) au moins une ouverture (44), si bien que le volume acoustique arrière est formé dans la zone entre la partie de recouvrement (40) et la partie de base (26).

10. Appareil de station selon la revendication 8,
**caractérisé en ce que** la partie de recouvrement (40) dans la zone de la chambre de réception (42) est configurée sans ouverture de telle manière que le volume acoustique arrière est formé dans la zone entre la partie de recouvrement (40), la partie porteuse (32) et la partie avant (28).

11. Appareil de station selon l'une quelconque des revendications 1 à 10,
**caractérisé en ce qu'**une chambre acoustique (50) dotée d'un canal acoustique (52) menant à une ouverture acoustique de boîtier (54) est disposée en amont du microphone (4) se trouvant dans le logement (46).

12. Appareil de station selon l'une quelconque des revendications 1 à 11,
**caractérisé en ce que** le microphone (4) est raccordé à une carte de circuits imprimés (36) par l'intermédiaire de raccordements électriques (58), dans lequel les raccordements (58) sont formés par des éléments de contact d'appui élastiques, lesquels reposent de manière électroconductrice sur des surfaces de contact (60) de la carte de circuits imprimés (36), concentriques les unes par rapport aux autres.

13. Appareil de station selon l'une quelconque des revendications 3 à 12,
**caractérisé en ce qu'**une partie de raccordement (62) dotée de bornes de raccordement (66) pour des câbles électriques est maintenue au niveau de la partie de base (26), dans lequel la partie de raccordement (62) est reliée de manière électrique à une carte de circuits imprimés (72), disposée dans la partie avant (28), par l'intermédiaire d'éléments de contact d'appui (70) élastiques.

14. Appareil de station selon la revendication 13,
**caractérisé en ce que** les éléments de contact d'appui (70) sont réalisés sous la forme de tiges à ressort, qui sont orientées de perpendiculairement par rapport à la carte de circuits imprimés (72).

15. Appareil de station selon la revendication 14,
**caractérisé en ce que** les éléments de contact d'appui (70) sont des composantes de la partie de raccordement (62), tandis que la carte de circuits imprimés (72) présente des surfaces de contact (74) servant à établir un contact d'appui électrique avec les éléments de contact d'appui (70).

16. Appareil de station selon l'une quelconque des revendications 1 à 15,
**caractérisé en ce que** des éléments de commutation capacitifs sont disposés à l'intérieur du boîtier d'appareil (2) directement sous la paroi avant (10) de la partie avant de boîtier (28) sur une carte de circuits imprimés (72), dans lequel la paroi avant (10) présente, dans ses zones recouvrant respectivement l'un des éléments de commutation, des symboles lumineux (78) perméables à la lumière et la carte de circuits imprimés (72) présente des dispositifs luminescents correspondants, dans lequel deux diodes électroluminescentes voisines sont associées, en tant que dispositif luminescent, à chaque symbole lumineux (78).

17. Appareil de station selon l'une quelconque des revendications 1 à 16,
**caractérisé par** des moyens activables ou désactivables côté utilisateur pour un enregistrement automatique d'un appel entrant dans l'installation de communication domestique depuis un autre appareil de station par l'établissement automatique d'une liaison audio en tant que réaction à un appel entrant.

18. Appareil de station selon l'une quelconque des revendications 13 à 17,
**caractérisé en ce que** la partie de raccordement (62) présente deux raccordements (66) pour une ligne de bus à deux fils, deux raccordements supplémentaires (66) pour un détecteur d'appel à étages externe ainsi que deux raccordements (66) supplémentaires pour une alimentation en tension auxiliaire, dans lequel des moyens d'identification automatique de l'alimentation en tension auxiliaire sont prévus.
